# EUROPEAN PATENT APPLICATION

(11) **EP 2 743 227 A1**
(43) Date of publication of application: **18.06.2014**
(21) Application number: 12197306.9
(22) Date of filing: 14.12.2012
(51) Int. Cl.: B66B 19/02, B66B 7/08, F16G 11/14

(54) **Elevator rope**

(71) Applicant: Kone Corporation, 00330 Helsinki (FI)
(72) Inventor: Perälä, Jussi, 05820 Hyvinkää (FI); Suoranta, Santeri, 02940 Espoo (FI)
(74) Representative: Graf Glück Kritzenberger

(57) **Abstract**

The invention relates to an elevator rope (10; 50; 70) having at least one rope end (12; 52; 72) being bent to form a sling (22; 56; 74), whereby the bent rope end is connected to a first rope part (24; 58; 80) ahead of the sling via at least one fixing point (26, 28; 60, 62; 82) and the fixing point is adjustable. Such a rope can be cut at a production or delivery site before transported to the building site. Via the invention at the building site after roping the rope is only adjusted to its final length.

## Description

The present invention relates to an elevator rope as well as a method for customizing and installing an elevator rope.

Currently, elevator ropes are provided as endless ropes on reels which are placed at a location in the bottom of the elevator shaft or at a landing. The ropes are roped in the elevator layout whereby they are threaded through all the pulleys arranged in the elevator shaft. Finally, the ropes are cut to their final length and their ends are fastened to elevator components which may be the elevator car, the elevator counterweight or any location in the elevator shaft or in a machine room. The current method of providing elevator ropes and installing them in the shaft has some disadvantages. First, the rope wheels are transported to the building side which reels carry much more elevator rope than necessary at the building side. This incurs transport and space problems. A further problem may result from the fact that the working conditions in the elevator shaft at the building side may sometimes be cumbersome with respect to adapted working conditions. Therefore, the cutting of the ropes to a desired length and fixing them to a rope terminal might become a problem.

The object of the present invention is to provide an elevator rope as well as a method for manufacturing and installing an elevator rope which reduces the problems of the prior art.

This object is solved with an elevator rope according to claim 1. The object is further solved by a method according to claim 11. Preferred embodiments of the invention are subject matter of the corresponding dependent claims.

The inventive elevator rope has at least one rope end which is bent to form a sling. The bent rope end is connected to a first rope part ahead of the sling via at least one fixing point and the fixing point is adjustable. Such an elevator rope can be cut at the manufacturing or delivering site to a length slightly longer than needed in the roping of the elevator layout. The adjustment of the elevator rope to its final length can then easily be accomplished by bending at least one of the rope ends to form a sling and connecting the bent rope ends to the rope part ahead of the sling via at least one fixing point whereby the fixing point is chosen in a way as to obtain the desired final rope length. The fixing of the rope end to the first rope part ahead of the sling can be performed in a very easy solution with a bracket or with a clamp which simply connects the rope end to the first rope part. The position at which the rope clamp grips the first rope part and the rope end can be freely selected as to obtain the desired rope length.

Preferably, the sling is used as the fixing point of the rope. On this behalf, in a preferred embodiment of the invention a lug can be provided within the sling so that the lug is used for fixing the rope ends to an elevator component, i. e. at the elevator car, elevator counterweight or at any position in the elevator shaft or machine room.

In one preferred embodiment of the invention the rope end is connected to a reel device having a reel body which is rotatable with respect to a reel frame. The frame is connected to the first rope part ahead of the reel device and the sling built by the reel device and the rope end is connected to the rotatable reel body. The rotational position of the reel body is lockable with respect to the reel frame. This arrangement has the advantage that by rotating the reel body within the reel frame the length of the elevator rope can be exactly adjusted to the desired length. The rotational position can be fixed by any kind of lock between the reel frame and the reel body, such as e.g. perforations in the reel body which are protruded by a bolt connected with the reel frame.

In an advantageous embodiment of the invention a ratchet mechanism can be provided between the reel body and the reel frame which allows the winding up of the rope onto the reel body but not its unwinding. This arrangement facilitates the winding of the rope on the reel body and the exact adjustment of the elevator rope to the exact rope end. Regularly, a ratchet mechanism has a comparably fine resolution of the ratchet detents along the perimeter. Accordingly, the fine adjustment could be performed with an accuracy in the area of only one centimeter or less. If for example the circumference of the reel body has 60 wedged detents this would result in a resolution of 6 degree rotation angle per wedged detent. In case of a reel body with a diameter of 10cm the resolution of the rope length adjustment would be about 0,5 cm. Preferably the reel device comprises a lever to release the ratchet mechanism. With this measure the rope end can easily be released. Accordingly, the rope can easily be removed or readjusted to circumstances which require a larger rope length than before.

Another preferred embodiment of the invention comprises first fixing elements as e. g. flaps which are spaced apart in the first rope part ahead of the sling. Furthermore, also the rope end has at least a second fixing element complementary to the first fixing elements, which could for example also be a flap. If e.g. the flap of the first fixing element and the flap of the second fixing element have a perforation the connection of both fixing elements can be performed via a bolt which protrudes both perforations. Anyway, also other fixing elements are possible which may be built in the elevator rope itself or which could be fixed to the elevator rope, e. g. by clamps. By choosing the appropriate one of the several spaced apart first fixing elements the length of the elevator rope can be adjusted to the desired final length for the elevator layout in question.

A further possibility of fixing the rope end is to provide a non-rotatable first pulley in the rope sling and to provide a counter pulley outside of the sling which is connected to the outer part of the bent rope part in the area of the sling as to press the end fix the elevator rope between the first pulley and the counter pulley. The arrangement carrying the first pulley and the counter pulley can for example be used to fix the rope end to an elevator component.

In a quite simple arrangement of the invention the first rope part and the rope end are connected via a clamp whereby via the placement of the clamp and via appropriate selection of the length of the rope end exceeding the sling the length of the elevator rope can be exactly adjusted.

Again it is to be emphasized that the rope length adjustment of the invention via a sling can be performed at one end or at both ends of the elevator rope. Furthermore, it should be emphasized that the provision of a lug in the sling offers a reliable possibility for fixing the rope end without affecting the rope life.

The invention further relates to a method for customizing and installing an elevator rope. According to this inventive method following succession of steps is performed: first, an elevator rope is cut at a production side or a delivery side to a length slightly longer than necessary in an intended elevator rope layout. This site can be the elevator company or rope company or a delivery stock of one of these companies.

The pre-cut elevator rope is then brought into the elevator shaft to be roped in line with the elevator layout. In this case the elevator rope has already acquired its final mounting position whereby the rope ends extend to the locations which are provided for fastening the elevator rope.

Now, at least one end of the rope is bent to form a sling where after the bent rope end is fixed to a first rope portion ahead of the sling. Finally, the exact rope length according to the elevator layout is adjusted by adjusting the fixing of the rope end which respect to the first rope portion whereby the sling is used for the fixing of the rope end to an elevator component. This method has the advantage that only the necessary rope length has to be brought to the building side and that the adjusting of the rope length by bending the rope ends to form a sling and fixing the rope ends to the rope part ahead of the sling is quite easy and can be performed under constricted working conditions which may prevail at the building site. Furthermore, no rope reels with large amounts of excessive rope are brought to the location in the building site which facilitates the whole installation work of the elevator. The invention therefore allows a faster and more economic installation of an elevator.

The statements with respect to the different embodiments of the elevator rope also hold true for the inventive method where the rope length is adjusted by bending the rope end to a sling and fixing the rope end to a first rope part ahead of the sling.

The invention is now described by way of an example in connection with the schematic drawings.

Figure 1 shows of a rope end comprising a reel device,

figure 2 shows an alternative embodiment for the locking of the reel device comprising a ratchet mechanism,

figure 3 shows a further embodiment of a rope end with first and second fixing parts which can be connected at different positions, and

figure 4 shows a further embodiment of a rope end where the rope end is fixed to a first rope part ahead of a sling via a clamp.

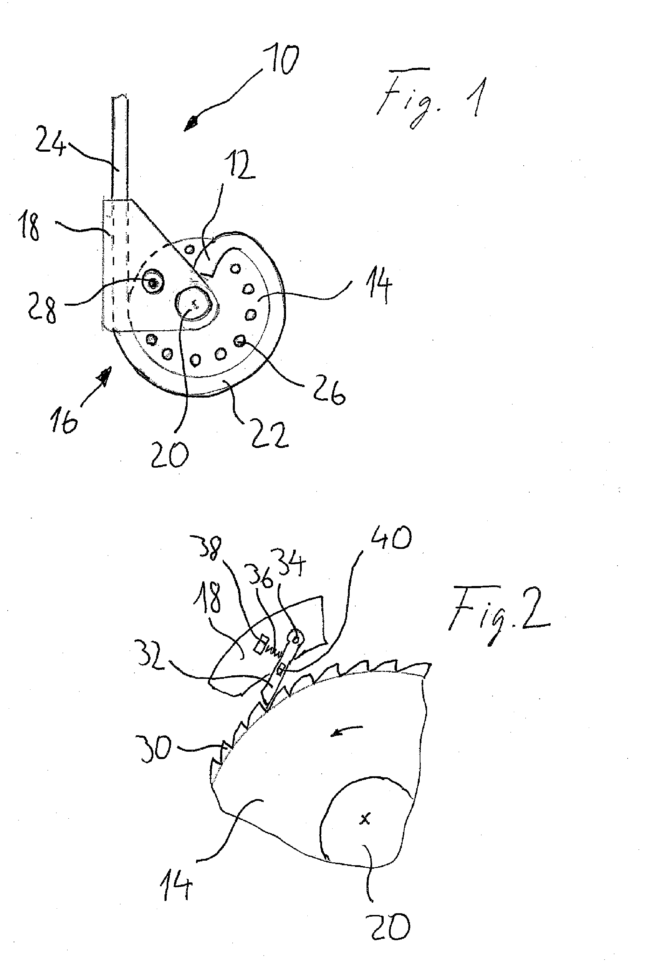

Figure 1 shows an elevator rope 10 having a rope end 12 which is fixed on a reel body 14 of a reel device 16 which further comprises a reel frame 18. The reel body 14 is rotationally linked to the reel frame 18 via a pivot 20. The rope part wound on the reel body 14 forms a sling 22. Further the rope 10 comprises a first rope part 24 ahead of the sling 22. The reel body 14 comprises a number of perforations 26 along a circle around the pivot 20 which perforations can be protruded by a locking bolt 28 connected with the reel frame 18. The reel frame 18 is supported against rotation by the first rope part 24 ahead of the sling 22.

The length of the rope can be easily adjusted to a desired length by fixing the rope end 12 to the reel body 14 and rotating the reel body according to a desired rope length. The exact rotational position is then locked by sticking the bolt 28 which is fixed in a perforation of the reel frame 18 through a perforation 26 of the reel body. The fixing of the rope end can be performed via a hole or recess perimeter of the reel body 14.

Advantageously, the adjusting of the rope length is performed after the rope has been roped in the elevator shaft. This procedure is advantageous in that only elevator ropes have to be transported to the building site of the elevator, which are slightly longer than necessary, e. g. 20 centimeter to a meter longer than necessary. The elevator ropes are precut to said slightly larger length on the manufacturing site or a distribution stock of the elevator manufacturer or the rope manufacturer. The inventive easy adjustment of the rope length on the building site is quick and can be performed under constricted working conditions.

Figure 2 shows another embodiment of a locking mechanism which could be provided in the reel device 18 of figure 1. The reel body may have additionally or instead of the perforations 26 a wedged detent arrangement 30 on its circumference. A ratchet latch 32 is supported via a pivot 34 at the reel frame 18. The ratchet latch 32 is biased via a spring 36 against the ratchet detents 30. The spring 36 is counter supported by a stop 38 of the reel frame 18. The ratchet mechanism allows the winding of elevator rope on the reel body 14 but prevents the unwinding of the rope by the locking action of the ratchet latch gripping into the ratchet detents 30 via the spring force. The lock can be released by a release lever 40 which is accessible from outside of the reel frame 18.

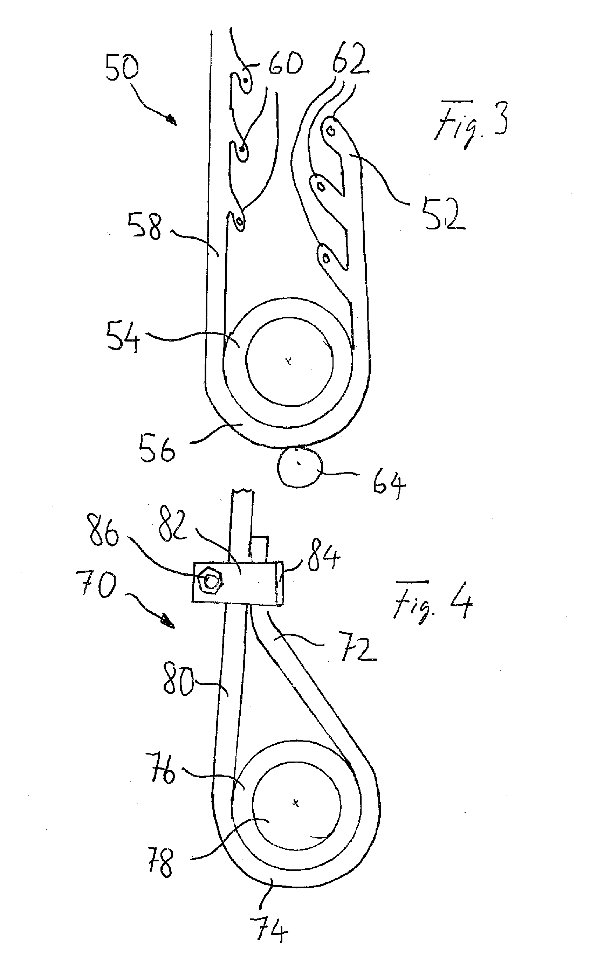

Figure 3 shows a rope 50 having a rope end 52 which is bent around a first pulley 54 as to build a sling 56. A first rope part 58 ahead of the sling 56 comprises several, e.g. three spaced apart first fixing elements 60 in form of flaps comprising a perforation. The rope end 52 carries at least one second (e.g. three) fixing element 62 which is embodied e.g. also in a form of a flap comprising a perforation. The perforation of the flaps of the first and second fixing means 60, 62 can be brought in alignment in different positions as to adjust the rope end 52 to the first rope part 58 at appropriate selected different fixing positions. Accordingly, the rope length is adjusted. Furthermore, a counter pulley 64 can be provided outside of the sling which is pressed by a device (not shown) against the first pulley 54 as to press the sling 65 in between. Both pulleys 54, 64 are not rotatable so that also the pressure on the sling by the pulley 54 and the counter pulley 64 locks the rope length which is adjusted via corresponding connection of the first and second fixing means 60, 62.

Finally, figure 4 shows a rope 70 having a rope end 72 which is bent to form a sling 74 which is guided around a first pulley 76 having an inner hole 78 for fixing the rope end. Ahead of the rope sling 74 is a first rope part 80. The adjustment of the length of the rope 70 is performed by bending the rope end 70 around the first pulley 76 and fixing the rope end 72 to the first rope part 80 via a clamp 82 in a desired position. The clamp 82 has a hinge 84 and the open end of the clamp 82 can be pressed together via a stud bolt 86. Also in this case an easy length adjustment of the rope ends can be performed so that the precutting of the elevator ropes in a manufacturing or distribution site and transporting only already customized elevator ropes to the building side of the elevator can be realized. In this last embodiment of figure 4 also a counter pulley 64 (not shown) can be pressed against the pulley 76 to fix the length adjustment made by the clamp 82.

In figs. 3 and 4 the connection of first pulley and counter pulley 54, 64; 76, 64 can e.g. easily be realized by a beam having support for both pulleys and whereby the mutual distance of the pulleys can be adjusted, e. g. by a means of a long hole.

The technical features of the illustrated embodiments may be combined with each other as long as this is technically feasible.

The invention may be varied within the scope of the appended patent claims.

## Claims

1. Elevator rope (10; 50; 70) having at least one rope end (12; 52; 72) being bent to form a sling (22; 56; 74), whereby the bent rope end is connected to a first rope part (24; 58; 80) ahead of the sling via at least one fixing point (26, 28; 60, 62; 82) and the fixing point is adjustable.

2. Elevator rope (10) wherein the rope end (12) is connected to a reel device (16) having a reel body(14) which is rotatable with respect to a reel frame (18), whereby the rotational position of the reel body is lockable (26, 28) with respect to the reel frame.

3. Elevator rope (10) according to claim 2 wherein the reel device (16) comprises a ratchet mechanism (32, 34, 36, 38, 40) between the reel body (14) and the reel frame (18).

4. Elevator rope (10) according to claim 2 or 3 wherein the rope end (12) is fixed to the reel body (14) and the reel frame (18) is supported at the first rope part (24).

5. Elevator rope (50) according to claim 1, wherein the unbent first rope part (58) comprises spaced apart first fixing elements (60) and the rope end (52) comprises at least one second fixing element (62), whereby the second fixing element is connectable to at least one of the first fixing elements.

6. Elevator rope (50) according to claim 5, wherein the first and second fixing elements (60, 62) are flaps comprising a perforation, whereby the perforation of at least one first (60) and at least one second (62) fixing element is lockable by a bolt protruding through the aligned perforations of the first and second fixing element.

7. Elevator rope (50) according to claim 5 or 6, wherein a first pulley (54; 76) is arranged not-rotatable in the sling (56; 74), whereby the pulley center forms a fixing part to connect the rope end (52; 72) to an elevator component.

8. Elevator rope (50) according to claim 7, wherein a counter-pulley (64) is provided at the end of the sling (56; 74) which counter-pulley is not-rotatable connected with the first pulley (54; 76), whereby the sling (56; 74) is pressed between the pulley and the counter-pulley.

9. Elevator rope (70) according to claim 1 wherein the first rope part (80) and the rope end (72) are connected via a clamp (82).

10. Method for installing an elevator rope (10; 50; 70), in which method following succession of steps is performed:
a) an elevator rope (10; 50; 70) is cut at a manufacture or delivery site to a length slightly longer than necessary for an intended elevator rope layout,
b) the pre-cut elevator rope is brought into an elevator shaft to be roped in line with the elevator layout,
c) at least one rope end (12; 52; 72) is bent to form a sling (22; 56; 74) which rope end is to be fixed to a first rope part (24; 58; 80) ahead of the sling,
d) an exact rope length according to the elevator layout is adjusted by fixing (26,28; 32-40; 60,62; 82) the rope end with respect to the first rope part in an corresponding position, and
e) the sling is used for the fixing of the rope to an elevator component.

11. Method according to claim 10, wherein the rope end (12) is wound on a reel body (14) which is rotatable arranged in a reel frame (18), which reel frame is supported at the first rope part (24), in which method after the adjustment of the exact rope length the rotational position of the reel body with respect to the reel frame is locked (26,28; 32-40).

12. Method according to claim 10, wherein several spaced apart first fixing elements (60) are provided at the first rope part (58), and where the rope length is adjusted by fixing the rope end (52) to at least one of the first fixing elements which provides the exact rope length.

13. Method according to claim 12, wherein the rope end (52) is provided with at least one second fixing element (62) and the rope end (52) is fixed to the first rope part (80) by connecting the second fixing element (62) with the first fixing element (60).
